# FASCICULE DE BREVET EUROPEEN

(11) **EP 4 511 887 B1**
(45) Date de publication et mention de la délivrance du brevet: **08.04.2026**
(21) Numéro de dépôt: 23716631.9
(22) Date de dépôt: 19.04.2023
(51) Int. Cl.: H01M 4/04, H01M 4/133, H01M 4/134, H01M 4/1393, H01M 4/1395, H01M 4/36, H01M 10/052, H01M 4/02

(54) **BATTERIE LITHIUM-IONS NOUVELLE GÉNÉRATION ET PROCÉDÉ DE FABRICATION ASSOCIÉ**
LITHIUM-IONEN BATTERIE DER NEUEN GENERATION UND DAS DAMIT VERBUNDENE HERSTELLUNGSVERFAHREN
NEW GENERATION LITHIUM-ION BATTERY AND METHOD OF MANUFACTURING ASSOCIATED TO

(30) Priorité: 20.04.2022 FR 2203663
(43) Date de publication de la demande: 26.02.2025
(73) Titulaire: Ecole Polytechnique, 91128 Palaiseau Cedex (FR); Centre National de la Recherche Scientifique, 75016 Paris (FR)
(72) Inventeur: FLOREA, Ileana, 91128 Palaiseau Cedex (FR); EZZEDINE, Mariam, 91128 Palaiseau Cedex (FR); JARDALI, Fatme, 91128 Palaiseau Cedex (FR); COJOCARU, Costel-Sorin, 91128 Palaiseau Cedex (FR)
(74) Mandataire: IPAZ
(86) Numéro de dépôt international: PCT/EP2023/060135
(87) Numéro de publication internationale: WO 2023/203077

(56) Documents cités:
- EP-A1- 3 214 674
- WO-A1-2015/124743
- CN-A- 103 247 786
- FR-A1- 3 018 955
- US-A1- 2013 209 880

## Description

### Domaine technique

La présente invention appartient au domaine technique des batteries à haute énergie nouvelle générations.

L'invention concerne une cathode à base de Soufre pour batteries Lithium-ion, dite LIB. L'invention porte en particulier une cathode à base de Soufre pour batteries Silicium lithié - Soufre.

Enfin, l'invention porte sur le procédé de fabrication d'une telle cathode et d'une telle batterie.

### Etat de la technique antérieure

Parmi les différents systèmes de stockage de l'énergie sous forme chimique, la batterie lithium-ion, dit LIB, s'est imposée depuis une trentaine d'années du fait de l'énergie et de la puissance que ce type de dispositif peut restituer. Cette technologie s'est largement développée et est utilisée dans la quasi-totalité des applications électroniques nomades ainsi que dans les véhicules électriques les plus récents au détriment des autres batteries rechargeables.

Jusqu'à présent, la plupart des batteries commerciales Lithium-ion utilisent du graphite comme matériau d'anode. Le graphite a l'avantage d'être un matériau peu coûteux et très abondant. Il a également une conductivité électrique élevée et une capacité spécifique théorique de 370 mAh/g.

On trouve principalement des cathodes dans les batteries Lithium-ions structurées en couches de type LiMO₂, où M est un métal tel que le Nickel, le Fer, le Cobalt, le Manganèse ou un mélange de ces métaux. A titre d'exemple, on connait l'utilisation de cathodes à base d'olivines LiMPO₄ ou de spinelle LiM₂O₄. Parmi ces matériaux de cathode, LiNi₁/3Mn₁/3Co₁/3O₂ est la cathode la plus utilisée en raison de son moindre coût, de sa moindre toxicité, et d'une meilleure stabilité au cyclage même à haute température. Cette cathode présente une capacité spécifique théorique d'environ 100 mAh/g.

Aujourd'hui, la technologie des LIBs a atteint 87 % de sa limite de densité d'énergie commercialement réalisable ; l'acquisition des 13 % restants sera coûteuse et lente avec des retours sur investissements très limités.

Le contexte environnemental et énergétique actuel et les limitations des batteries Lithium-ion motivent la recherche de nouvelles technologies de batterie, moins onéreuses, ayant un impact écologique moins important, s'affranchissant de l'utilisation de métaux problématiques et se raréfiant, tel le cobalt, et délivrant des densités de puissance et d'énergie plus élevées.

Dans le but d'accroître la densité d'énergie de ces systèmes électrochimiques, une des solutions consiste à maximiser le stockage du lithium dans les matériaux hôtes. Ceci peut-être réaliser par l'augmentation de la matière active par unité de surface et en utilisant des matériaux ayant une grande capacité de stockage. Il s'agit d'augmenter la capacité, à savoir le nombre de charges (mAh) par unité de poids et/ou de volume.

L'une des technologies phares et la plus prometteuse envisagée pour les prochaines générations de batteries demeure la technologie Silicium lithié - Soufre.

Le Soufre (S) et le Silicium (Si) sont deux matériaux d'électrodes attrayants pour la future génération de batteries en raison de leur abondance, de leur capacité théorique élevée et de leur faible coût.

Pour l'électrode positive aussi appelée cathode, le Soufre présente l'avantage d'une haute capacité spécifique (1675 mAh/g), six à dix fois supérieure à celle des cathodes utilisées actuellement dans les batteries commerciales.

Pour l'électrode négative aussi appelée anode, le Silicium présente l'avantage d'une haute capacité spécifique (3579 mAh/g), dix fois supérieure à celle des anodes utilisées actuellement dans les batteries commerciales.

Cependant, au cours du cycle de décharge et de charge, l'insertion du Lithium dans le Soufre et le Silicium cause d'importantes variations volumiques et donc morphologiques de l'ordre de 80 et 300%, respectivement. Ces variations induisent de fortes contraintes mécaniques entraînant la pulvérisation de la matière active, résultant en une perte de la capacité.

De plus, pour la cathode en Soufre, la réduction du Soufre élémentaire en-traine la formation d'une chaine intermédiaire de polysulfures de Lithium (Li₂Sₓ, 3<x<8) qui sont solubles dans les électrolytes organiques usuels, provoquant une dégradation de la capacité à long terme, ralentissant la cinétique de réaction pendant l'exécution et l'autodécharge de la batterie.

Un autre problème des électrodes de Soufre et de Silicium réside dans leur faible conductivité électronique, ce qui impose généralement l'ajout de conducteur électronique en quantité non négligeable pour assurer la bonne percolation électronique de l'électrode.

Cela constitue un verrou technologique car la conservation de la capacité spécifique nominale de telles électrodes reste un problème majeur non résolu.

S'agissant des procédés de mise en œuvre pour les électrodes commerciales actuelles, ils nécessitent l'utilisation de liants conducteurs polymères et/ou d'additifs conducteurs à base de carbone. Les liants et additifs requièrent l'utilisation de composés chimiques polluants et toxiques.

La présente invention vise à pallier, au moins en partie, les inconvénients de l'utilisation du Soufre et du silicium dans les batteries de nouvelle génération.

Un but de l'invention est, en outre, de proposer une cathode à base de Soufre :
- présentant une énergie spécifique supérieure aux cathodes à base de Soufre de l'état de l'art, et/ou
- disposant d'une durée de vie supérieure aux cathodes à base de Soufre de l'état de l'art, et/ou
- ne réduisant pas, ou peu ou moins que les cathodes à base de Soufre de l'état de l'art, au cours des cycles de décharge et de charge successifs, l'efficacité de la charge et/ou le rendement coulombique d'une batterie dans laquelle une telle cathode est utilisée, et/ou
- n'entrainant pas, ou peu ou moins que les cathodes à base de Soufre de l'état de l'art, au cours des cycles de décharge et de charge successifs, d'autodécharge de l'accumulateur et/ou de perte irréversible de capacité d'une batterie dans laquelle une telle cathode est utilisée.

Un but de l'invention est, en outre, de proposer une batterie de type Silicium lithié - Soufre :
- visant à pallier, au moins en partie, aux inconvénients des LIBs, et/ou
- présentant une énergie spécifique supérieure à 270 Wh/kg et/ou
- disposant d'une durée de vie d'au moins 2000 cycles charges/décharges.

Un but de l'invention est, en outre, de proposer un procédé de fabrication d'une batterie de type Silicium lithié - Soufre :
- visant à pallier, au moins en partie, aux inconvénients des procédé de fabrication des LIBs de l'état de la technique, et/ou
- ne nécessitant pas l'utilisation de liant ou d'additif durant la fabrication des électrodes.

### Présentation de l'invention

A cet effet, il est proposé une cathode pour batterie Lithium-Ions comprenant :
- une couche d'un matériau conducteur, de préférence de l'Aluminium, agencée pour collecter le courant circulant à travers la cathode, dit substrat de la cathode,
- une couche de Nanotubes de carbone (NTC) alignés en contact électrique avec le substrat de la cathode et s'étendant, de préférence depuis une de leur extrémité parmi deux extrémités, principalement perpendiculairement par rapport au substrat de la cathode,
- du Soufre solide qui tapisse, au moins en partie, une paroi externe des NTCs, et
- une couche solide de Sulfate de Lithium (Li₂SO₄), dite couche externe de Li₂SO₄, recouvrant, au moins en partie, de préférence en totalité, la couche de NTCs de sorte à former un empilement de couches dans lequel la couche de NTCs est comprise entre le substrat de la cathode et la couche externe de de Li₂SO₄, et/ou
- du Sulfate de Lithium solide (Li₂SO₄) encapsulant et/ou enveloppant, au moins en partie, le Soufre solide qui tapisse les parois externes des NTCs.

De préférence, le Soufre solide forme une couche, continue ou discontinue, et/ou des nanoparticules. La couche et/ou les nanoparticules de Soufre solide présente une épaisseur ou, respectivement, un diamètre inférieur à 20 nm, de préférence, inférieure à 10 nm. De préférence, une épaisseur de Soufre solide inférieure à 20 nm a pour effet de ne pas augmenter significativement la résistance de la couche et/ou des nanoparticules de Soufre solide. De préférence, cet effet est renforcé pour une épaisseur de Soufre inférieure à 10 nm.

De préférence, le Li₂SO₄ est perméable à l'électrolyte.

De préférence, le Li₂SO₄ est imperméable aux polysulfures.

De préférence, la couche externe de Li₂SO₄ et le Li₂SO₄ recouvrant les le Soufre solide a pour effet de maintenir ou séquestrer les polysulfures, formés par la réduction du Soufre solide lorsque la cathode est en fonctionnement, dans la cathode. Autrement dit, la couche externe de Li₂SO₄ et le Li₂SO₄ recouvrant les le Soufre solide a pour effet d'empêcher les polysulfures de diffuser hors de la cathode.

De préférence, du Sulfate de Lithium (Li₂SO₄) recouvre et/ou enveloppe, en outre, au moins en partie, de préférence en partie seulement, des NTCs tapissant les parois externes des NTCs.

De préférence, la couche externe de Li₂SO₄ présente une épaisseur inférieure à 10 nm, de préférence inférieure à 8 nm, et/ou supérieure à 3 nm.

Le Li₂SO₄ encapsulant, au moins en partie, le Soufre solide et/ou enveloppant, au moins en partie, des NTCs peut former un film continue ou discontinue, dit couche film interne de Li₂SO₄. Le film interne de Li₂SO₄ peut s'étendre, au moins en partie, dans la couche de NTCs. De préférence, le film interne est un film mince. Le film mince peut présenter une épaisseur inférieure à 10 nm, de préférence inférieure à 8 nm.

De préférence, le Soufre solide peut être une quelconque des formes allotropiques connues du Soufre solide. Le Soufre solide peut être de formule Sₙ, où n est le nombre d'atomes de Soufre. De préférence, le Soufre solide peut présenter une structure cyclique. A titre d'exemple non limitatif, le Soufre solide peut être de formule S₆, S₈, S₉, S₁₀, S₁₂, S₁₈ ou S₂₀. De préférence, le Soufre solide est de formule S₈.

Selon l'invention, il peut être entendu par couche un film.

De préférence, la couche de NTCs recouvre et/ou est en contact, de préférence direct, avec le substrat de la cathode. De préférence, le substrat de la cathode est recouvert et/ou est en contact, de préférence direct, avec une face ou surface ou côté de la couche de NTCs située du côté opposé à la face ou surface ou côté de la couche de NTCs en contact avec la couche externe de Li₂SO₄.

De préférence, la cathode ne comprend pas de liant polymère ni d'additifs carboné.

De préférence, la couche de Li₂SO₄ a pour effet d'empêcher la diffusion de Soufre hors de la cathode et/ou la formation de produits intermédiaires polysulfures.

De préférence, la couche solide de Li₂SO₄ recouvre et/ou en contact, de préférence direct, avec l'autre extrémité des NTCs et/ou avec une face ou surface ou côté, dite face ou surface ou côté externe, de la couche de NTCs située du côté opposé à la face ou surface ou côté de la couche de NTCs en contact avec le substrat de la cathode.

La couche de Li₂SO₄ peut former un enrobage de la couche de NTCs.

De préférence, la couche solide de Li₂SO₄ forme une couche ou interface externe de la cathode. De préférence, la couche ou la surface externe, formée par la couche solide de Li₂SO₄, est destinée à être portée en contact avec un élément poreux ou un séparateur imbibé d'électrolyte dans une cellule Lithium-ions.

De préférence, la couche de Li₂SO₄ présente une épaisseur supérieure à 25 nm, de préférence encore à 50 nm, de manière davantage préférée à 75 nm et de manière encore davantage préférée à 100 nm et/ou inférieure à 2000 nm, de préférence encore à 1000 nm, de manière davantage préférée à 750 nm et de manière encore davantage préférée à 500 nm.

De préférence, les NTCs de la cathode :
- présentent une longueur est supérieure à 10 µm, de préférence à 30 µm et/ou est inférieure à 500 µm, de préférence à 250 µm, et/ou
- comprennent entre deux et dix parois et/ou, de préférence, présentent un diamètre compris entre 4 et 16 nm, de préférence comprennent entre trois et cinq parois et/ou, de préférence encore, présentent un diamètre compris entre 5 et 8 nm, et/ou
- présentent une densité comprise entre 1.10¹¹ et 1.10¹² tubes/cm².

Les NTCs ont pour effet d'augmenter la surface spécifique de l'électrode et/ou d'assurer un transfert de charge rapide entre la couche de matériau conducteur et les nanoparticules de Soufre et/ou de conférer à l'électrode une meilleure résistance à l'expansion volumique sans subir de dégradation et/ou de fournir un support physique très conducteur.

De préférence, une charge massique en Soufre des nanoparticules de Soufre S₈ est supérieure à 1,5 mg/cm².

Dans le cas des particules solides de Soufre, les particules vont gonfler et se rétracter de manière importante lors des cycles de charges/décharges consécutifs. Selon l'invention, la charge massique en nanoparticules de Soufre est agencée pour que les nanoparticules de Soufre soient suffisamment espacées en raison de leur gonflement. Pendant la décharge, le Soufre solide se dissout dans l'électrolyte puis subit une réduction pour finalement précipiter sous forme de sulfure de lithium (Li₂S) dans une cathode. La précipitation de Li₂S a lieu à l'interface avec l'électrolyte. Le volume molaire partiel de Li₂S est de 2,768.10⁻⁵ m³/mol, tandis que le volume molaire partiel de Soufre solide (S₈) est de 1,239.10⁻⁴ m³/mol. Considérant que chaque mole de Soufre solide peut se dissocier en huit moles de Li₂S, la conversion complète d'une mole de S₈ en Li₂S occupe 76 % d'espace supplémentaire. La faible densité des nanoparticules de Soufre permet que leur taille varie peu lors des cycles de charges/décharges consécutifs.

Selon l'invention, il est également proposé une batterie Lithium-Ions, dit LIB, comprenant la cathode selon l'invention.

De préférence, la LIB ne comprend pas de liant polymère ni d'additifs de carbone.

De préférence, la LIB selon l'invention est dite « de nouvelle génération ».

Le couplage de ces deux électrodes de grande capacités, une électrode de Silicium (3579 mAh/g) et une électrode Soufre (1675 mAh/g), permet d'obtenir une tension de cellule moyenne de 2,15 V et une énergie spécifique théorique de 1982 Wh/kg (basée sur les deux électrodes), qui est d'un ordre de grandeur supérieur à celui des LIB traditionnels.

De préférence, la LIB comprend :
- une anode à base de, ou comprenant des, nanoparticules de Silicium, de préférence greffées sur des NTCs,
- un élément poreux disposé entre la cathode et l'anode.

De préférence, l'anode ne comprend pas de liant polymère ni d'additifs de carbone.

De préférence, les nanoparticules de Silicium sont composées de Silicium amorphe. De préférence, les nanoparticules de Silicium présentent une taille supérieure à 1 nm, de préférence à 2 nm, de préférence encore à 5 nm et/ou inférieure à 50 nm, de préférence à 40 nm, de préférence encore à 30 nm.

De préférence, l'élément poreux est une membrane. L'élément poreux peut être formé d'un empilement de deux couches distinctes.

De préférence, l'anode de la LIB comprend :
- une couche d'un matériau conducteur, de préférence du cuivre, agencée pour collecter le courant circulant à travers l'anode, dit substrat de l'anode,
- une couche de Nanotubes de carbone (NTC) alignés en contact électrique avec le substrat de l'anode et s'étendant, de préférence depuis une de leur extrémité, principalement perpendiculairement par rapport audit substrat de l'anode,
- des nanoparticules de Silicium qui tapissent, au moins, de préférence uniquement, la paroi externe d'au moins une partie des NTCs, de préférence la paroi externe des NTCs.

De préférence, la couche de NTCs recouvre et/ou est en contact, de préférence direct, avec le substrat de l'anode. De préférence, le substrat de l'anode est recouvert et/ou est en contact, de préférence direct, avec une face ou surface ou côté de la couche de NTCs située du côté opposé à la face ou surface ou côté, dite face ou surface ou côté externe, de la couche de NTCs destinée à être en contact avec l'élément poreux.

De préférence, l'élément poreux recouvre et/ou en contact, de préférence direct, avec l'autre extrémité des NTCs et/ou avec la face externe de la couche de NTCs située du côté opposé à la face ou surface ou côté de la couche de NTCs en contact avec le substrat de la cathode.

De préférence, la taille des nanoparticules de Silicium est supérieure à 2 nm, de préférence encore à 5 nm et/ou est inférieure à 50 nm, de préférence encore à 40 nm et de manière davantage préférée à 30 nm.

De préférence, une charge massique en Silicium des nanoparticules de Silicium de l'anode est supérieure ou égale à 2 mg/cm². De préférence, la charge massique en Silicium des nanoparticules de Silicium de l'anode est supérieure ou égale à 0,01 mg/cm², de préférence encore à 0,1 mg/cm², de manière préférée à 1 mg/cm², de manière davantage préférée à 2 mg/cm², de manière encore davantage préférée à 2,5 mg/cm², de manière particulièrement préférée à 3 mg/cm², de manière tout particulièrement préférée à 3,5 et de manière davantage préférée entre toutes à 4 mg/cm². De préférence, la charge massique en Silicium des nanoparticules de Silicium de l'anode est inférieure ou égale à 5 mg/cm². De préférence, la charge massique en Silicium des nanoparticules de Silicium de l'anode est égale à 4,5 mg/cm².

Selon l'invention, il est également proposé un procédé de fabrication d'une cathode, de préférence d'une cathode selon l'invention, de préférence encore une cathode pour, ou destinée à être intégrée dans, une batterie Lithium-Ions, dite LIB, de manière davantage préférée dans une LIB selon l'invention. Le procédé comprenant les étapes consistant à :
- obtenir, ou fournir, une électrode, dite étape d'obtention de l'électrode, comprenant une couche d'un matériau conducteur, agencée pour collecter le courant circulant à travers la cathode, dit substrat de l'électrode, depuis laquelle s'étend, principalement perpendiculairement, une couche de Nanotubes de carbone (NTC) alignés en contact électrique avec le substrat de l'électrode, puis
- recouvrir ou déposer sur une face ou surface ou un côté de la couche de NTCs, située du côté opposé à une face ou surface ou un côté, dite face ou surface ou côté externe, de la couche de NTCs en contact électrique avec le substrat de l'électrode, avec une solution, dite solution soufrée, comprenant du Soufre solide pour former un revêtement, ou recouvrir ou revêtir ou greffer ou tapisser ou former un revêtement, de Soufre solide qui tapisse, au moins une partie une paroi externe des NTCs, puis
- recouvrir avec ou déposer sur la face externe de la couche de NTCs une solution comprenant du Sulfate de Lithium (Li₂SO₄) dissous pour former une couche solide de Sulfate de Lithium solide (Li₂SO₄) recouvrant la couche NTCs.

De préférence, l'étape consistant à recouvrir la face de la couche de NTCs, située du côté opposé à la face de la couche de NTCs en contact électrique avec le substrat de l'électrode, avec la solution de Li₂SO₄ peut consister à déposer une goutte ou un film ou une pellicule de la solution de Li₂SO₄ sur la face de la couche de NTCs, située du côté opposé à la face de la couche de NTCs en contact électrique avec le substrat de l'électrode.

De préférence, la solution de Li₂SO₄ est une solution aqueuse de Li₂SO₄.

De préférence, le procédé comprend, préalablement à l'étape consistant à former la couche solide de Li₂SO₄, une étape de séchage de la solution de soufrée tapissant, au moins en partie, la paroi externe des NTCs. De préférence, le procédé comprend, préalablement à l'étape consistant à sécher la solution soufrée, une étape de rinçage de la cathode, de préférence une étape de rinçage de la solution soufrée déposée sur la face externe de la couche de NTCs.

De préférence, le procédé comprend, subséquemment à l'étape consistant à recouvrir la face de la couche de NTCs avec la solution comprenant du Li₂SO₄ dissous, une étape de séchage du Li₂SO₄. De préférence, le procédé comprend, préalablement à l'étape de séchage du Li₂SO₄.

De préférence, l'étape consistant à recouvrir la face externe de la couche de NTCs avec la solution soufrée et/ou avec la solution comprenant du Li₂SO₄ dissous comprend une étape de pénétration desdites solution dans la couche de NTCs en direction du substrat, de préférence encore jusqu'au substrat.

De préférence, l'étape de pénétration de la solution soufrée dans la couche de NTCs a pour effet d'encapsuler et/ou d'envelopper, au moins en partie, le Soufre solide qui tapisse les parois externes des NTCs avec du Sulfate de Lithium solide (Li₂SO₄).

De préférence, la solution soufrée comprend, en outre, une poudre de Soufre solide, pouvant contenir des ou être constituée de nanoparticules de Soufre solide, un solvant polaire, de préférence aprotique ou protique, de préférence encore de l'alcool isopropylique et/ou de la N-methyl-2-pyrrolidone, et du disulfure de carbone.

Ces solvants sont cités à titre d'exemple. Il existe d'autre solvants adaptés que l'homme du métier saura à même de choisir.

De préférence, un ratio volumique, V_{SCS}/V_{SP}, entre un volume de disulfure de carbone, noté V_{SCS}, et un volume de solvant polaire, noté V_{SP}, est compris entre 10 et 30 %. De préférence, le ratio volumique V_{SCS}/V_{SP} est supérieur ou égal à 10 %, de préférence à 12 %, de préférence encore à 14 %, de manière préférée à 15 %, de manière davantage préférée à 16 %, de manière encore davantage préférée à 18 % et de manière davantage préférée entre toutes entre 20 %. De préférence, le ratio volumique V_{SCS}/V_{SP} est inférieur ou égal à 30 %, de préférence à 28 %, de préférence encore à 26 %, de manière préférée à 25 %, de manière davantage préférée à 24 %, de manière encore davantage préférée à 22 % et de manière davantage préférée entre toutes à 20 %.

De préférence, le procédé de fabrication d'une cathode comprend l'étape, dite de traitement plasma, consistant à traiter les NTCs de l'électrode, de préférence à traiter l'électrode, avec un plasma froid ou athermique et/ou de vapeur d'eau ; l'étape de traitement plasma est mise en œuvre préalablement à l'étape consistant à recouvrir la couche de NTCs avec la solution soufrée et subséquemment à l'étape d'obtention de l'électrode.

L'étape de traitement plasma a pour effet de créer des défauts sur la paroi externe des NTCs. A titre d'exemple, l'étape de traitement peut être réalisée par irradiation ionique.

De préférence, l'étape de traitement plasma comprend, en outre, une accélération, par polarisation, de, tout ou partie, des espèces présentent dans le plasma vers l'électrode.

De préférence, l'étape d'obtention de l'électrode comprend une étape de synthèse des NTCs sur le substrat de l'électrode par dépôt chimique en phase vapeur par filaments chauds, ladite étape de synthèse comprend :
- la disposition du substrat de l'électrode à équidistance de quatre filaments chauds alignés, de préférence longitudinalement,
- un balayage d'un gaz, comprenant des précurseurs parallèlement aux filaments chauds.

De préférence, le gaz comprenant les précurseurs comprend de l'hydrogène gazeux et des précurseurs gazeux carbonés, tels que par exemple, du méthane et/ou d'acétylène, de l'éthylène, de propan-2-ol, et de carbone monoxyde.

De préférence, le procédé comprend, préalablement à l'étape de synthèse des NTCs, une étape de dépôt d'une couche, dite couche barrière, d'une épaisseur comprise entre 5 et 80 nm, de préférence entre 10 et 50 nm, d'oxyde d'Aluminium (Al₂O₃) déposée sur le substrat d'électrode et d'une couche de Fer, dite couche de catalyseur, déposée sur la couche barrière, d'une épaisseur comprise entre 1 et 30 nm.

Le procédé de fabrication de la cathode selon l'invention est particulièrement adapté, de préférence encore spécialement conçu, pour mettre en œuvre la cathode selon l'invention. Ainsi, toute caractéristique du procédé de fabrication de la cathode selon l'invention peut être intégrée dans la cathode selon l'invention et inversement.

Selon l'invention, il est également proposé un procédé de fabrication d'une batterie Lithium-Ions, dit LIB, comprenant les étapes consistant en :
- mettre en œuvre le procédé de fabrication d'une cathode selon l'invention,
- obtenir ou fournir une anode pour la LIB,
- assembler la LIB en intercalant un élément poreux entre la cathode et l'anode.

De préférence, le procédé de fabrication d'une LIB comprend l'étape consistant à sceller, dans un milieu dépourvu d'oxygène gazeux, la cathode, l'élément poreux et l'anode pour former la LIB.

De préférence, le procédé de fabrication d'une LIB comprend l'étape consistant à imbiber l'élément poreux avec de l'électrolyte.

Le procédé de fabrication de la LIB selon l'invention est particulièrement adapté, de préférence encore spécialement conçu, pour mettre en œuvre la LIB selon l'invention. Ainsi, toute caractéristique du procédé de fabrication de la LIB selon l'invention peut être intégrée dans la LIB selon l'invention et inversement.

### Description des figures

D'autres avantages et particularités de l'invention apparaîtront à la lecture de la description détaillée de mises en œuvre et de modes de réalisation nullement limitatifs, et des dessins annexés suivants :
[Fig. 1] la FIGURE 1 illustre trois images en microscopie électronique à balayage de trois collecteurs de courant nanostructurés selon l'invention dont les tapis de nanotubes de carbone verticalement alignés présentent des épaisseurs de 30, 60 et 150 µm,
[Fig. 2] la FIGURE 2 est une image en microscopie électronique à transmission de nanotubes de carbone d'un mode de réalisation d'une cathode dont les nanotubes de carbone sont revêtus de Soufre solide et une représentation schématique d'une telle électrode dont les nanotubes de carbone sont revêtus de Soufre solide,
[Fig. 3] la FIGURE 3 est une image en microscopie électronique à balayage d'une partie du film de nanotube de carbone revêtus de nanoparticules de Silicium d'un mode de réalisation d'une anode selon l'invention et une représentation schématique d'une telle anode,
[Fig. 4] la FIGURE 4 est une image en microscopie électronique à transmission de nanotubes de carbone d'un mode de réalisation d'une cathode dont les nanotubes de carbone sont revêtus d'une couche solide de Sulfate de Lithium solide et une représentation schématique d'une cathode selon l'invention,
[Fig. 5] la FIGURE 5 est une représentation schématique d'une batterie Lithium-ions selon l'invention,
[Fig. 6] la FIGURE 6 est un graphique illustrant l'évolution de la capacité spécifique et de la capacité surfacique de la cathode 1 contre du lithium métallique selon l'invention pour 500 cycles de décharge à un taux de décharge de C/3,
[Fig. 7] la FIGURE 7 est un graphique illustrant l'évolution de la capacité spécifique et de la capacité surfacique de la cathode 1 contre du lithium métallique selon l'invention pour 1000 cycles de décharge à un taux de décharge de 2C,
[Fig. 8] la FIGURE 8 est un graphique illustrant la capacité spécifique d'anodes 3 selon l'invention présentant différentes charges massiques en Silicium, contre du lithium métallique, pour 6 cycles de décharge à un taux de décharge de C/20,
[Fig. 9] la FIGURE 9 est un graphique illustrant l'évolution de la capacité spécifique et de l'efficacité Coulombique de l'anode 3 contre du lithium métallique selon l'invention pour 2000 cycles de décharge à un taux de décharge de C/20 et C/5,
[Fig. 10] la FIGURE 10 est un graphique illustrant la capacité spécifique et la capacité surfacique d'une batterie Lithium-ions selon l'invention à taux de charge de C/20,
[Fig. 11] la FIGURE 11 est un graphique illustrant la densité d'énergie d'une batterie Lithium-ions selon l'invention à taux de charge de C/20.

### Description des modes de réalisation

Les modes de réalisation décrits ci-après étant nullement limitatifs, on pourra notamment considérer des variantes de l'invention ne comprenant qu'une sélection de caractéristiques décrites, isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

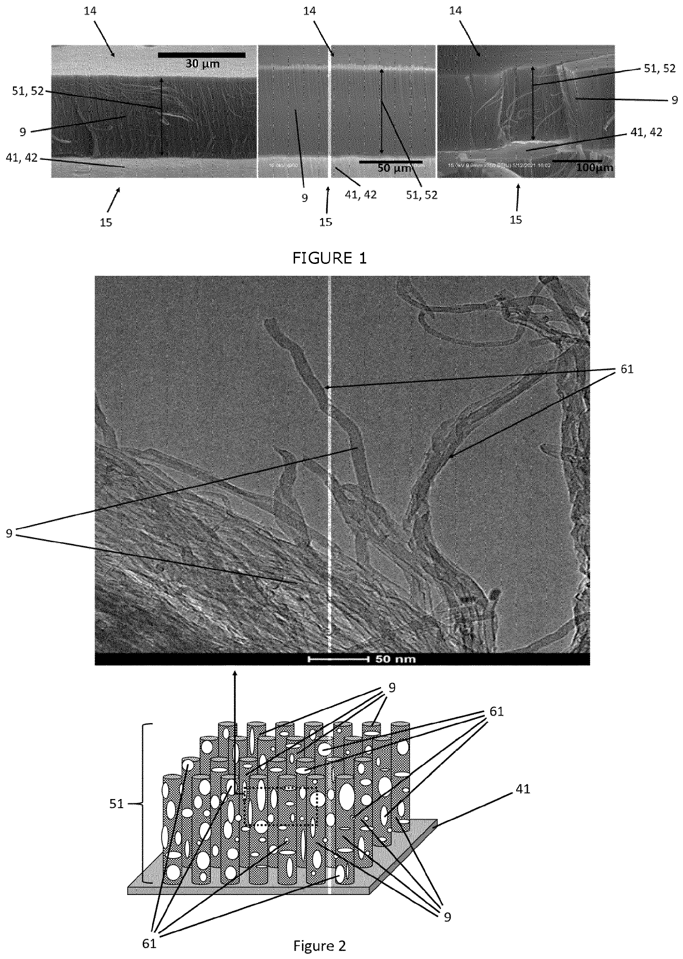

En référence aux FIGURES 1 à 11, il est décrit un mode de réalisation de l'invention.

En référence aux FIGURES 1 à 5, il est présenté une cathode 1 selon l'invention pour Batteries Lithium-Ions (LIBs). La cathode 1 comprend une couche 41 d'un matériau conducteur agencée pour collecter le courant circulant à travers la cathode 1, dit substrat 41 de la cathode 1. Selon le mode de réalisation le matériau conducteur est de l'Aluminium. La cathode comprend une couche 51 de Nanotubes de carbone (NTCs) 9 alignés en contact électrique avec le substrat 41 de la cathode 1. Les NTCs 9 s'étendent, depuis une de leur extrémité, dite extrémité proximale, principalement perpendiculairement par rapport au substrat 41 de la cathode 1. Les NTCs 9 selon l'invention sont multiparois et comprennent au moins une paroi.

En référence aux FIGURES 1 à 5, les NTCs 9 comprennent entre trois et cinq parois pour un diamètre compris entre 5 et 8 nm. Les NTCs 9 selon le mode de réalisation ont une longueur comprise entre 30 et 200 µm.

La cathode 1 comprend du Soufre solide 61 qui tapisse, au moins en partie, une paroi externe des NTCs 9. Tel qu'illustré sur la FIGURE 2, le Soufre solide 61 peut former un film mince discontinu. Toutefois, selon les conditions de dépôt du Soufre solide 61, il peut former un film quasi-continu. Le Soufre solide 61 présente une épaisseur de l'ordre de 5 à 10 nm selon le mode de réalisation. La faible épaisseur de Soufre solide 61 sur la surface des NTCs 9 rend le Soufre solide 61 difficile à imager par microscopie électronique à balayage. Selon le mode de réalisation non limitatif, le Soufre solide 61 est du Soufre S₈ ou cyclooctasoufre formant un film mince discontinu.

La cathode 1 comprend également une couche solide 7 de Sulfate de Lithium solide (Li₂SO₄), dite couche externe 7 de Li₂SO₄, recouvrant la couche 51 de NTCs 9 de sorte à former un empilement de couches dans lequel la couche 51 de NTCs 9 est comprise entre le substrat 41 de la cathode 1 et la couche externe 7 de Li₂SO₄. La couche externe 7 recouvre l'autre extrémité, dite extrémité distale, des NTCs 9. Cette couche 7 a pour effet d'empêcher la diffusion de polysulfures de Lithium, formés par la réduction du Soufre élémentaire, dans l'électrolyte lors du cyclage, hors de la cathode 1, lorsque cette dernière est en fonctionnement au sein d'une LIB. Avantageusement, selon le mode de réalisation, la couche solide 7 est continue et recouvre la couche 51 de NTCs 9. L'épaisseur de la couche externe 7 est estimée comme étant comprise entre 1000 à 2000 nm selon le mode de réalisation.

Bien que, en ajustant les conditions de dépôt du Li₂SO₄, la cathode 1 puisse comprendre seulement la couche externe 7 de Li₂SO₄ ; de manière préférée, la cathode 1 comprend également du Li₂SO₄, dit film protecteur 8, encapsulant et/ou enveloppant, au moins en partie, le Soufre solide 61 qui tapisse les parois externes des NTCs 9. Le film protecteur 8 présente une épaisseur estimée entre 3 à 8 nm selon le mode de réalisation. Le film protecteur 8 de Li₂SO₄ a pour effet d'empêcher la diffusion de polysulfures de Lithium dans l'électrolyte contenue dans la cathode 1 lorsque cette dernière est en fonctionnement au sein d'une LIB.

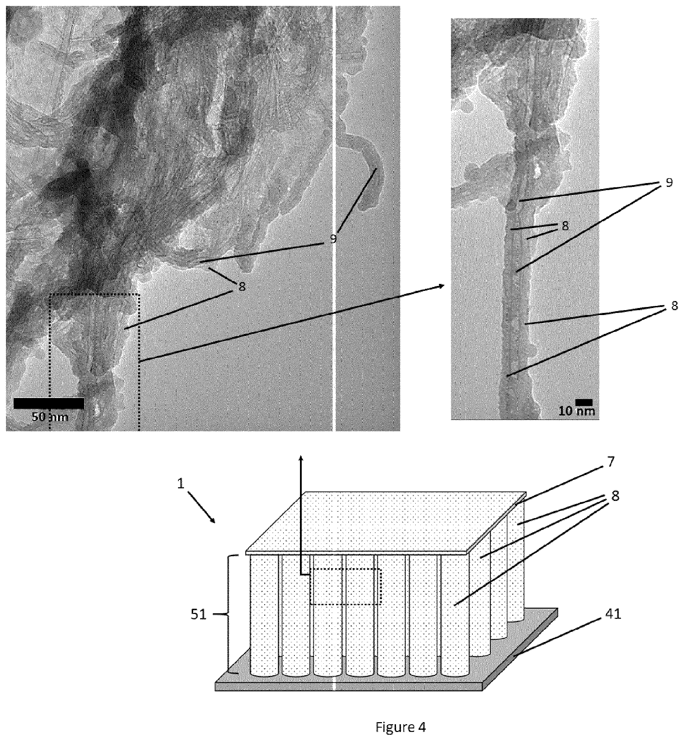

En référence à la représentation schématique de la FIGURE 4, le film protecteur 8 de Li₂SO₄ est représenté comme formant une couche continue tapissant intégralement le Soufre solide 61 et les NTCs 9. Toutefois, selon les conditions de dépôt du Li₂SO₄, le film protecteur 8 de Li₂SO₄ peut être quasi-continue ou discontinue. Il peut former des plaques solides 8 de Li₂SO₄ ou un film solide discontinue 8 de Li₂SO₄ tapissant en partie les NTCs 9 et en partie le Soufre solide 61. Dans ce cas, bien qu'offrant une protection moindre contre la diffusion de polysulfures de Lithium dans l'électrolyte, son effet est tout de même notable. Le film solide discontinue 8 de Li₂SO₄ tapissant en partie les NTCs 9 et en partie le Soufre solide 61 a pour effet d'encapsuler et/ou d'envelopper, au moins en partie, le Soufre solide 61 qui tapisse les parois externes des NTCs 9. En référence à l'image de microscopie électronique en transmission de la FIGURE 4, on peut observer le film protecteur 8 de Li₂SO₄ formant une couche continue tapissant intégralement les NTCs 9.

La cathode 1 selon l'invention présente une charge massique en Soufre solide 61 qui est supérieure à 1,5 mg/cm². La charge massique en Soufre solide 61 de la cathode 1 illustrée sur la FIGURE 2 est estimée à 2 mg/cm². La charge massique est ajustable en modifiant les conditions de mise en œuvre de la cathode 1 tel que décrit dans la partie se rapportant au procédé selon l'invention. L'augmentation de la charge massique permet d'améliorer les performances de la cathode 1 et donc d'une LIB comprenant une telle cathode 1. Il existe une limite supérieure de charge massique par unité de surface qui permet d'améliorer les performances de la cathode 1. Cette limite est déterminée par la densité des NTCs 9 sur le substrat 41, c'est-à-dire la distance entre les NTCs 9, la longueur et/ou l'épaisseur des NTCs 9 et par l'expansion volumique du Soufre solide 61 durant les cycles de charge/décharge.

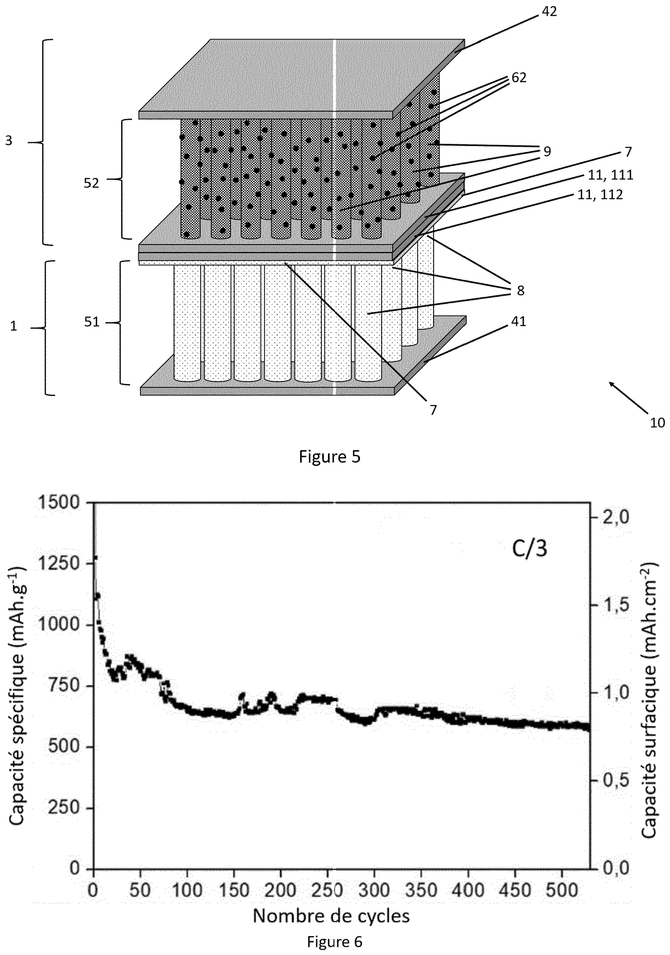

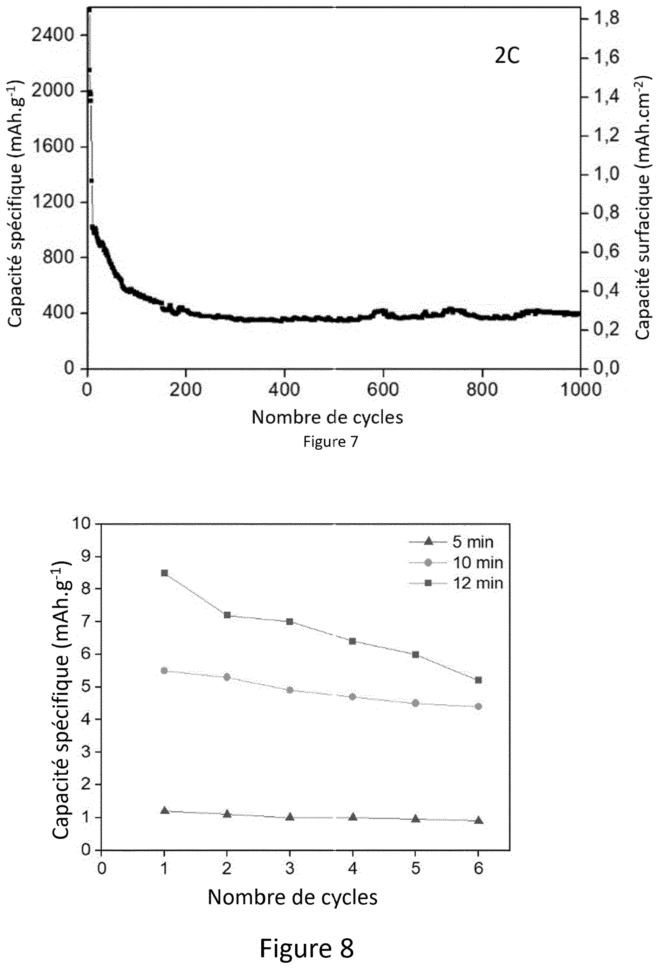

En référence à la FIGURE 6, il est présenté l'évolution de la capacité spécifique et de la capacité surfacique de la cathode 1 selon l'invention pour 500 cycles de décharge à un taux de décharge de C/3. On remarque que la cathode 1 présente une capacité spécifique se stabilisant à une valeur supérieure à 500 mAh.g⁻¹. Les performances de la cathode 1 selon l'invention, pour un taux de décharge de C/3, sont donc 2,6 fois supérieure aux batteries Li-ions commerciales. En référence à la FIGURE 7, il est présenté l'évolution de la capacité spécifique et de la capacité surfacique de la cathode 1 selon l'invention pour 1000 cycles de décharge à un taux de décharge de 2C. On remarque que la cathode 1 présente une capacité spécifique se stabilisant à une valeur supérieure de l'ordre de 400 mAh.g⁻¹. Les performances de la cathode 1 selon l'invention, pour un taux de décharge de 2C, sont donc 2,2 fois supérieure aux batteries Li-ions commerciales.

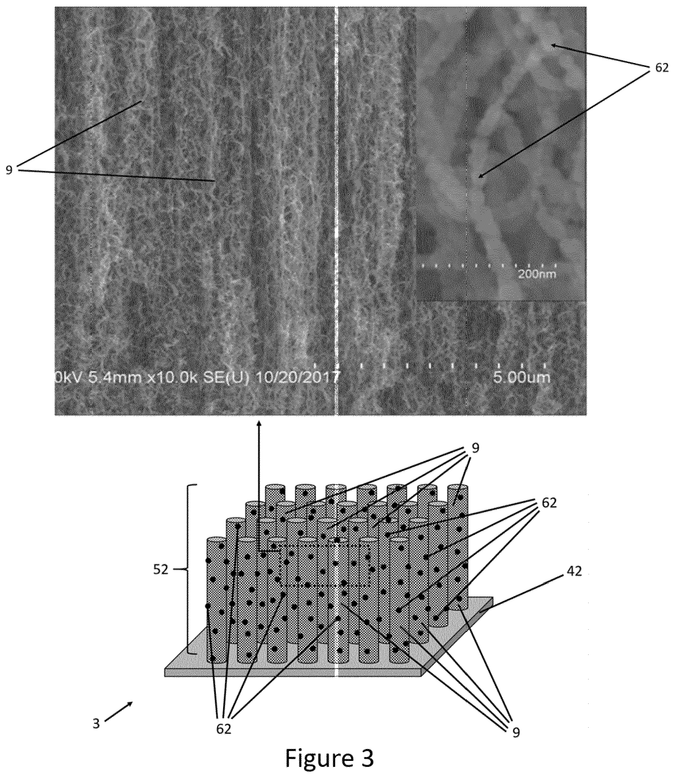

Selon le mode de réalisation, en référence à la FIGURE 3, il est également décrit une anode 3 à base de nanoparticules 62 (NPs) de Silicium.

L'anode 3 comprend une couche 42 d'un matériau conducteur agencée pour collecter le courant circulant à travers l'anode 3, dit substrat 42 de l'anode 3. Le matériau conducteur est du cuivre selon le mode de réalisation. L'anode 3 comprend une couche 52 de NTCs 9 alignés en contact électrique avec le substrat 42 de l'anode 3. Les NTCs 9 s'étendent, depuis une de leur extrémité, principalement perpendiculairement par rapport au substrat 42 de l'anode 3.

Les NPs 62 de l'anode 3 tapissent la paroi externe des NTCs 9. La taille des NPs 62 de Silicium est comprise entre 5 et 30 nm selon le mode de réalisation.

L'anode 3 selon l'invention présente, de préférence, une charge massique en Silicium qui est supérieure à 2 mg/cm². La charge massique est ajustable en modifiant les conditions de mise en œuvre de l'anode 3 tel que décrit dans la partie se rapportant au procédé selon l'invention. En référence à la FIGURE 8, il est illustré la capacité spécifique d'anodes 3 selon l'invention présentant des charges massiques en Silicium de 0,2, 2,5 et 4 mg/cm². Il est observé que l'augmentation de la charge massique permet d'améliorer la capacité spécifique de l'anode 3 et donc les performances de l'anode 3 et donc d'une LIB 10 comprenant une telle anode 3. Comme évoquer pour la cathode 1, il existe une limite supérieure de charge massique par unité de surface qui permet d'améliorer les performances de l'anode 3.

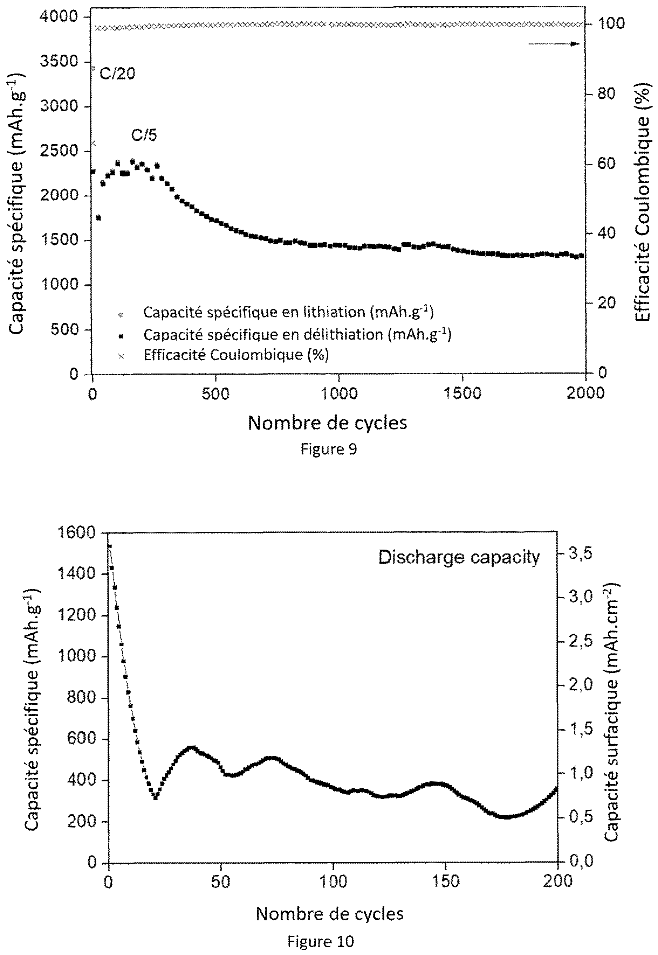

En référence à la FIGURE 9, il est présenté l'évolution de la capacité spécifique et de l'efficacité Coulombique de l'anode 3 selon l'invention, présentant une charge massique en Silicium de 0.03 mg/cm², pour 2000 cycles de décharge à un taux de décharge de C/20 et C/5. On remarque que l'anode 3 présente une capacité spécifique se stabilisant à une valeur supérieure à 1250 mAh.g⁻¹. L'efficacité Coulombique présente une valeur stable de l'ordre de 100%. Les performances de l'anode 3 selon l'invention, pour un taux de décharge de C/5, sont donc 3,6 fois supérieure aux batteries Li-ions commerciales.

Selon le mode de réalisation, en référence à la FIGURE 5, il est également décrit une LIB 10 comprenant la cathode 1 selon l'invention. Bien que la cathode 1 selon l'invention puisse être montée dans une LIB avec une anode quelconque ; selon le mode de réalisation, la cathode 1 est montée avec l'anode 3 selon le mode de réalisation.

Selon le mode de réalisation, la LIB 10 est une pile bouton au format CR2032 comprenant un élément poreux 111, 112 formé par un empilement 11 de deux couches 111, 112 intercalé entre l'anode 3 et la cathode 1. L'empilement 11 comprend une couche 111, ou espaceur, qui est constituée de microfibre de verre, vendue sous l'appellation commerciale Glass Microfibre Filter par le fabricant Whatman^{®}, d'une épaisseur de 675 µm, d'un diamètre de 16,5 mm et d'un seuil de rétention de 2,7 µm. L'autre couche 112 de l'empilement 11, ou séparateur, de 25 µm d'épaisseur est constitué de polypropylene microporeux vendu sous l'appellation commerciale Celgard 2400 par le fabricant Celgard^{®}.

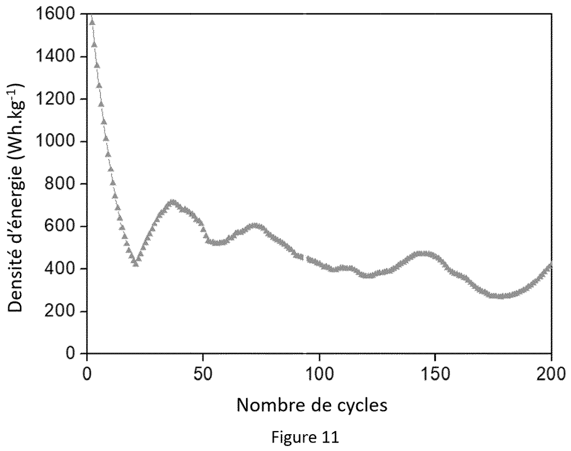

Les FIGURES 10 et 11 illustrent les performances de la LIB 10 selon l'invention. La charge massique en Soufre et Silicium de la cathode 1 et de l'anode 3 est de 1 mg/cm². Les cycles sont réalisés à taux de charge de C/20. Une capacité de décharge stables supérieure à 300 mAh/g sont obtenues après 100 cycles. La LIB 10 présente une densité d'énergie de l'ordre de 750 Wh.kg⁻¹. Cette valeur de densité d'énergie est trois fois supérieure aux batteries Lithium-ion commerciales.

Selon le mode de réalisation, il est également un mode de réalisation d'un procédé de fabrication d'une cathode 1 selon l'invention. Le procédé comprenant l'étape consistant à obtenir une électrode 15, dite étape d'obtention de l'électrode 15, telle que représentée sur la FIGURE 1. Cette étape peut consister à se procurer l'électrode 15 ou à acheter une électrode commerciale 15. En référence à la FIGURE 1, l'électrode 15 comprend une couche 41 d'un matériau conducteur, de l'Aluminium selon le mode de réalisation, agencée pour collecter le courant circulant à travers la cathode 1, dit substrat 41 de l'électrode 15. L'électrode 15 comprend une couche 51 de NTCs alignés 9 s'étendant, principalement perpendiculairement, depuis le substrat 41. Les NTCs 9 sont en contact électrique, par une de leur extrémité, avec le substrat 41 de l'électrode 15.

Le procédé comprend, en outre, l'étape consistant à recouvrir la face externe 14 de la couche 51 de NTCs 9 avec une solution soufrée comprenant du Soufre solide pour former le revêtement de Soufre solide 61 tapissant la paroi externe des NTCs 9 tel qu'illustré sur la FIGURE 2. La face externe 14 de la couche 51 de NTCs 9 est située du côté opposé à la face de la couche 51 de NTCs 9 en contact électrique avec le substrat 41 de l'électrode 15.

Le procédé comprend l'étape consistant à recouvrir la face externe 14 de la couche 51 de NTCs 9 avec une solution comprenant du Li₂SO₄ pour former la couche 8 de Li₂SO₄, c'est-à-dire le film protecteur 8 de Li₂SO₄, recouvrant la couche 51 de NTCs 9. Selon le mode de réalisation non limitatif, la solution comprenant Li₂SO₄ est une solution aqueuse, de l'eau distillée et l'alcool isopropylique, dans laquelle est dissous le Li₂SO₄ à une concentration de 1 mol.l⁻¹.

Selon le mode de réalisation non limitatif, l'étape consistant à recouvrir la face externe 14 de la couche 51 de NTCs 9 avec la solution comprenant du Li₂SO₄ comprend l'infiltration de la solution comprenant du Li₂SO₄ dans la couche 51 de NTCs 9. L'infiltration de la solution comprenant du Li₂SO₄ dans la couche 51 de NTCs 9 permet de former un film solide, pouvant être discontinu, 8 de Li₂SO₄ tapissant, au moins en partie, les NTCs 9 et le Soufre solide 61.

Selon le mode de réalisation, l'étape consistant à former le revêtement de Soufre solide 61 tapissant la paroi externe des NTCs 9 comprend l'infiltration de la solution soufrée dans la couche 51 de NTCs 9. La solution soufrée est composée de Soufre S₈ (Sigma Aldrich) ou cyclooctasoufre dans une solution comprenant du disulfure de carbone (CS₂) avec de l'alcool isopropylique (IPA) ou avec de la N-méthyl-2-pyrrolidone (NMP) dans un rapport volumique entre (7:3) et (9:1). Ensuite, les NTCs 9 sont lavés à plusieurs reprises avec des solutions soufrées diluées. Les NTCs 9 sont ensuite séchés, par exemple dans une étuve, à 40 °C entre 4 et 8 heures.

Selon un mode de réalisation non limitatif, il est proposé un procédé de fabrication de l'anode 3 selon le mode de réalisation. Le procédé d'obtention étape d'obtention de l'électrode 15 décrite plus haut. Les NPs 62 sont déposés sur les NTCs 9 par dépôt vapeur en phase chimique (CVD) au moyen d'un flux gazeux utilisant un précurseur de silane dilué (SiH₄) mélangé avec du dihydrogène (H₂). Le substrat 42 est chargé dans un réacteur CVD préchauffé à 540°C qui est balayé avec du H₂ à un débit de 30 centimètres cubes par minutes (sccm). De manière alternative, un mélange gazeux de SiH₄ à une concentration de 1% dilué dans du diazote (N2) peut être utilisé. Il est dans ce cas possible de travailler jusqu'à pression ambiante.

Après 3 à 10 minutes de chauffage du substrat 42, le SiH₄ est introduit dans le réacteur CVD à un débit de 10 sccm et un filament de tungstène placé à l'entrée du H₂ dans le réacteur est chauffé à environ 1000°C (pour une puissance comprise entre 70 et 80 W). De l'hydrogène atomique est ainsi générer pour graver l'excès de silicium à la surface des NTCs 9 et améliorer le dépôt et l'homogénéité des NPs 62 sur toute la longueur des NTCs 9.

La pression à l'intérieur du réacteur est maintenue à 5 mbar avec une pression partielle en SiH₄ comprise entre 1 à 5 mbar. La durée de synthèse est comprise entre 1 et 15 minutes selon la taille de NPs de Silicium 62 recherchée. A la fin du processus, l'électrode 15 obtenue est déplacée vers une zone de refroidissement dans le réacteur et retirée du réacteur après refroidissement complet. Le diamètre des NPs 62 est compris entre 5 nm et 30 nm pour des temps de dépôt compris entre 3 minutes et 15 minutes. Au-delà de 10 minutes, une couche de silicium commence à se former. L'homogénéité et la densité du dépôt de NPs 62 peuvent être ajustées en modifiant les paramètres associés au temps de dépôt, au flux de gaz et à la puissance du filament chaud.

Selon un mode réalisation, il est proposé une étape de génération de défauts sur les NTCs 9. Selon le mode de réalisation non limitatif présenté cette étape est réalisée par un traitement plasma. L'électrode 15, préalablement à la fabrication de l'anode 3, de la cathode 1 ou de la LIB 10, est exposée à un plasma de vapeur d'eau non thermique à une pression de 2 mbar dans un réacteur CVD, par exemple par dépôt chimique en phase vapeur assisté par plasma (Plasma Enhanced Chemical Vapor Deposition (PECVD)). Le réacteur PECVD présente une configuration à trois électrodes. Un plasma de vapeur d'eau non thermique est allumé entre deux électrodes en graphite multi-trous situées au-dessus de l'électrode 15. Les deux électrodes en graphite sont distantes de 2,5 cm. Une troisième électrode située sous l'électrode 15, agissant comme un support, est reliée au pôle négatif de l'alimentation qui est équipé d'un voltmètre. Lorsque l'alimentation est éteinte, elle agit comme un voltmètre flottant, sinon elle peut être utilisée pour générer une puissance contrôlable en appliquant une polarisation négative pour obtenir un flux ionique contrôlable et une énergie ionique frappant l'électrode 15.

La vapeur d'eau est injectée à un débit de 10 sccm et la pression à l'intérieur du réacteur est de l'ordre de 2 mbar. Un plasma est créé en appliquant une tension comprise entre 650 et 700 V entre les deux électrodes en graphite du réacteur.

Après l'allumage du plasma, la tension appliquée à l'anode du réacteur PECVD est maintenue quasiment constante comprise entre 400 et 420 Volts avec une intensité de courant entre les deux électrodes multi-trous de l'ordre de 0,20 à 0,24 A. Avec cet ensemble de paramètres plasma, le les expériences ont été poursuivies en modifiant le temps d'exposition qui a varié de 2 à 10 minutes.

Une différence de potentiel entre la deuxième et la troisième électrode a été ajoutée en appliquant une puissance de 1 à 5 W à la troisième électrode connectée à l'électrode 15 ce qui permet un meilleur contrôle du flux et de l'énergie des ions bombardant l'électrode 15.

La taille et la densité des défauts créés sont contrôlables via le temps d'exposition au plasma et les paramètres du plasma (tension et densité de courant).

Selon le mode de réalisation, il est également proposé un procédé de fabrication d'une LIB 10. Le procédé de fabrication de la LIB 10 comprend l'étape consistant à obtenir une anode 3. Cette étape peut consister à se procurer l'anode 3 ou à acheter une anode commerciale 3. Le procédé de fabrication comprend, en outre, l'étape consistant à assembler la LIB 10 en intercalant l'empilement 11 des deux couches 111, 112 entre la cathode 1 et l'anode 3.

Selon un mode de réalisation non limitatif, la LIB 10 comprend une solution d'électrolyte contenant 1 M de Lithium bis(trifluoromethanesulfonyl)imide (LiTFSi) et 0,25 M Nitrate de lithium (LiNO₃) dans du 1,3-dioxolane : 1,2-diméthoxyéthane (DOL: DME) dans un rapport volumique 1:1. Une prélithiation de l'anode 3 est réalisée en cyclant l'anode 3 avec du Lithium métallique selon une configuration pile bouton. Un morceau de lithium, agissant comme une source de lithium supplémentaire pendant la décharge, peut être placé sur l'anode 3. La masse de silicium dans l'anode est équilibrée avec la masse de Soufre dans la cathode.

La LIB 10 est fabriquée en boîte à gants sous atmosphère d'argon. L'anode 3 lithiée est posée sur le boîtier négatif et recouvert des deux couches 111, 112. La cathode 1 est placée sur le séparateur 112 et est recouverte d'une entretoise en acier inoxydable. Un ressort en acier inoxydable est placé sur l'entretoise pour fournir une pression et un contact suffisants entre tous les composants. La LIB 10 est ensuite scellée dans une pile bouton à sertir.

Il est également proposé une étape alternative à l'étape de pré-lithiation, décrite ci-dessus, de la cathode 1. Cette étape alternative consiste à, durant l'étape du procédé selon l'invention consistant à recouvrir les NTCs 9 avec la solution soufrée, recouvrir les NTCs avec du Sulfure de Lithium (Li₂S). La cathode Li₂S évite l'étape de pré-lithiation du silicium. De plus, le Li₂S présente l'avantage de posséder une densité plus faible (1,66 g.cm⁻³) que celle du Soufre (2,07 g.cm⁻³) de sorte qu'il n'est pas nécessaire de réserver un espace vide supplémentaire pour adopter une éventuelle expansion de volume lors du cyclage.

Selon un mode de réalisation non limitatif, l'étape consistant à obtenir l'électrode 15 peut comprendre être une synthèse de l'électrode 15.

Le procédé de synthèse peut être réalisé sur des feuilles minces commerciales d'aluminium (Al) ou de cuivre (Cu), utilisées comme substrat 41, 42, d'une épaisseur comprise entre 10 et 50 µm.

Une couche d'oxyde d'aluminium (Al₂O₃), d'épaisseur comprise entre 10 et 50 nm d'épaisseur, puis une couche de fer (Fe), d'épaisseur comprise entre 1 et 10 nm, sont déposée successivement sur les substrats 41, 42 dans un évaporateur à faisceau d'électrons. Les dépôts (d'oxyde d'Aluminium et de Fer) sont réalisés sous vide poussé (de l'ordre de 10⁻⁸ mbar). Pendant le dépôt, la température des substrats 41, 42 est maintenue à 300°C. Le processus de chauffage des substrats est essentiel pour différentes raisons : 1) assure le dégazage de toutes les impuretés des substrats, 2) permet la diffusion des atomes à la surface de la couche d'alumine pré-déposée, et 3) favorise l'adhésion des multicouches avec les substrats et améliorent également l'adhérence des NTCs pendant leur croissance ultérieure. D'autres catalyseurs, tels que du Cobalt, du Nickel ou des alliages peuvent être utilisés. L'épaisseur initiale et la nature chimique du catalyseur permettent de déterminer la morphologie des NTCs 9 résultants (diamètre du tube et nombre de parois). En outre, la variation des paramètres de dépôt CVD (temps de prétraitement entre 1 et 5 minutes et/ou composition et pression des gaz), la surface totale des NTCs 9 et la densité des NTCs 9 peut être contrôlée et, par conséquent, la porosité (distance inter-tubes) du tapis de NTCs 9 résultant aligné verticalement.

Ensuite, les NTCs 9 sont synthétisés dans un réacteur de dépôt chimique en phase vapeur à quadruple filaments chauds (4HF-CVD). La principale différence entre un réacteur CVD thermique standard et le réacteur 4HF-CVD réside dans l'ajout de quatre filaments de tungstène à l'entrée de chaque gaz du réacteur. La présence de quatre filaments de tungstène (deux à chaque entrée de gaz) permet la croissance des de NTCs 9 alignés avec un degré accru d'uniformité dans le diamètre et la longueur des NTCs 9 et surtout leur synthèse sur de grandes surfaces.

Le substrat 41, 42 revêtus des couches catalyseurs (Al₂O₃ et Fe), est maintenu dans une zone de refroidissement en attendant que le réacteur atteigne la température de 600°C et une pression de 8 mbar. Le substrat 41, 42 revêtus des couches catalyseurs (Al₂O₃ et Fe) sont déplacés vers la zone de dépôt où aucun gradient thermique significatif n'est présent.

Un prétraitement des catalyseurs sous hydrogène gazeux activé (ou hydrogène atomique) est effectué pendant 1 à 5 minutes. L'hydrogène gazeux circule le long de deux filaments de tungstène dédiés qui sont chauffés à plus de 2000°C (pour une puissance appliquée comprise entre 400 et 500 W) à un débit entre 50 et 75 sccm et une pression du réacteur entre 5 et 12 mbar. L'hydrogène atomique/activé ce qui réduit la couche de catalyseur de Fer et crée des défauts ponctuels dans la couche d'Al₂O₃ sous-jacente qui agiront comme des sites de piégeage pour la formation de nanoparticules de catalyseur.

La croissance à proprement dite des NTCs 9 est réalisée en exposant le substrat prétraité à un mélange gazeux de CH_{4/}H₂ à un débit de 50 et 20 sccm respectivement et à une pression du réacteur comprise entre 10 et 15 mbar. Le temps de croissance est compris entre 5 et 120 minutes et permet aux hauteurs de NTCs de se situer entre 7 µm et 200 µm. Le CH₄ circule le long de deux filaments alimentés dédiés. Le rôle de la génération d'hydrogène atomique dans cette étape est d'empêcher l'excès de dépôt de carbone amorphe pendant la croissance des NTCs 9. Le temps de croissance est proportionnel à la longueur finale souhaitée des NTCs 9 tant que le catalyseur est actif, c'est-à-dire à la hauteur du tapis de NTCs 9 alignés obtenu.

Après la croissance des NTCs 9, les électrodes 15 sont déplacées vers la zone de refroidissement à la fin du processus de croissance et conservés jusqu'au refroidissement complet du réacteur.

De manière générale, le diamètre, le nombre de parois et la densité des NTCs 9 peuvent être réglés via l'épaisseur initiale de la couche de catalyseur, sa nature chimique (Fe, Co, Ni ou alliages), le flux et la composition des précurseurs de gaz, la pression et la durée de l'étape de prétraitement.

Bien sûr, l'invention n'est pas limitée aux exemples qui viennent d'être décrits et de nombreux aménagements peuvent être apportés à ces exemples sans sortir du cadre de l'invention.

De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

## Revendications

1. Cathode (1) pour batterie Lithium-Ions comprenant :
- une couche (41) d'un matériau conducteur agencée pour collecter le courant circulant à travers la cathode, dit substrat de la cathode,
- une couche (51) de Nanotubes de carbone (NTC) alignés (9) en contact électrique avec le substrat de la cathode et s'étendant principalement perpendiculairement par rapport au substrat de la cathode,
- du Soufre solide (61) qui tapisse, au moins en partie, une paroi externe des NTCs, et
- une couche solide (7) de Sulfate de Lithium solide (Li₂SO₄), dite couche externe de Li₂SO₄, recouvrant la couche de NTCs de sorte à former un empilement de couches dans lequel la couche de NTCs est comprise entre le substrat de la cathode et la couche externe de Li₂SO₄.

2. Cathode (1) selon la revendication 1, comprenant du Sulfate de Lithium solide (Li₂SO₄) (8) encapsulant et/ou enveloppant, au moins en partie, le Soufre solide (61) qui tapisse les parois externes des NTCs (9).

3. Cathode (1) selon la revendication 1 ou 2, dans laquelle une charge massique en Soufre solide (61) est supérieure à 1,5 mg/cm².

4. Cathode (1) selon l'une quelconque des revendications 1 à 3, dans laquelle la couche externe de Li₂SO₄ présente une épaisseur inférieure à 10 nm et supérieure à 3 nm.

5. Batterie Lithium-Ions (10), dit LIB, comprenant la cathode (1) selon l'une des revendications 1 à 4.

6. LIB (10) selon la revendication 5, comprenant :
- une anode (3) à base de nanoparticules de Silicium (62),
- un élément poreux (111, 112) disposé entre la cathode (1) et l'anode.

7. LIB (10) selon la revendication 6, dans lequel l'anode (3) comprend :
- une couche (42) d'un matériau conducteur, dit substrat de l'anode, agencée pour collecter le courant circulant à travers l'anode,
- une couche (52) de Nanotubes de carbone (NTC) alignés (9) en contact électrique avec le substrat de l'anode et s'étendant principalement perpendiculairement par rapport audit substrat de l'anode,
- des nanoparticules de Silicium (62) qui tapissent la paroi externe des NTCs.

8. LIB (10) selon la revendication 6 ou 7, dans lequel une charge massique en Silicium des nanoparticules de Silicium (62) de l'anode (3) est supérieure à 2 mg/cm².

9. Procédé de fabrication d'une cathode (1), ledit procédé comprenant les étapes consistant à :
- obtenir une électrode (15), dite étape d'obtention de l'électrode, comprenant une couche (41) d'un matériau conducteur, agencée pour collecter le courant circulant à travers la cathode, dit substrat de l'électrode, depuis laquelle s'étend, principalement perpendiculairement, une couche (51) de Nanotubes de carbone (NTC) alignés (9) en contact électrique avec le substrat de l'électrode, puis
- recouvrir une face (14), dit face externe, de la couche de NTCs, située du côté opposé à une face de la couche de NTCs en contact électrique avec le substrat de l'électrode, avec une solution, dite solution soufrée, comprenant du Soufre solide (61) pour former un revêtement de Soufre solide qui tapisse, au moins une partie, une paroi externe des NTCs, puis
- recouvrir la face externe de la couche de NTCs avec une solution comprenant du Sulfate de Lithium (Li₂SO₄) dissous pour former une couche (7) de Sulfate de Lithium solide (Li₂SO₄) recouvrant la couche de NTCs.

10. Procédé selon la revendication 9, dans lequel la solution soufrée comprend une poudre de Soufre solide, un solvant polaire et du disulfure de carbone, un ratio volumique entre le disulfure de carbone et le solvant polaire est compris entre 10 et 30 %.

11. Procédé selon la revendication 9 ou 10, comprenant une étape, dite de traitement plasma, consistant à traiter les NTCs (9) de l'électrode (15) avec un plasma froid et/ou de vapeur d'eau ; l'étape de traitement plasma est mise en œuvre préalablement à l'étape consistant à recouvrir la couche de NTCs avec la solution soufrée et subséquemment à l'étape d'obtention de l'électrode.

12. Procédé selon la revendication précédente, dans lequel l'étape de traitement plasma comprend, en outre, une accélération, par polarisation, de, tout ou partie, des espèces présentent dans le plasma vers l'électrode (15).

13. Procédé selon l'une quelconque des revendications 9 à 12, dans lequel l'étape d'obtention de l'électrode (15) comprend une étape de synthèse des NTCs (9) sur le substrat (41, 42) de l'électrode par dépôt chimique en phase vapeur par filaments chauds, ladite étape de synthèse comprend :
- la disposition du substrat de l'électrode à équidistance de quatre filaments chauds alignés,
- un balayage d'un gaz, comprenant des précurseurs, parallèlement aux filaments chauds.

14. Procédé selon la revendication précédente, comprenant, préalablement à l'étape de synthèse des NTCs (9), une étape de dépôt d'une couche, dite couche barrière, d'oxyde d'Aluminium (Al₂O₃) d'une épaisseur comprise entre 5 et 80 nm sur le substrat de l'électrode et d'une couche de Fer, dite couche de catalyseur, déposée sur la couche barrière, d'une épaisseur comprise entre 1 et 30 nm.

15. Procédé de fabrication d'une batterie Lithium-Ions (10), dit LIB, comprenant les étapes consistant en :
- mettre en œuvre le procédé de fabrication d'une cathode (1) selon l'une des revendications 9 à 14,
- obtenir une anode (3) pour la LIB,
- assembler la LIB en intercalant un élément poreux (11) entre la cathode et l'anode.

## Patentansprüche

1. Kathode (1) für eine Lithiumionenbatterie, umfassend:
- eine Schicht (41) aus einem leitfähigen Material, die den durch die Kathode fließenden Strom aufnehmen kann und Substrat der Kathode genannt wird,
- eine Schicht (51) aus Kohlenstoffnanoröhren (NTC) (9), die in elektrischem Kontakt mit dem Substrat der Kathode ausgerichtet sind und sich hauptsächlich senkrecht zum Substrat der Kathode erstrecken,
- festen Schwefel (61), der wenigstens teilweise eine Außenwand der NTCs überzieht, und
- eine massive Schicht (7) aus festem Lithiumsulfat (Li₂SO₄), die externe Li₂SO₄-Schicht genannt wird und die Schicht der NTCs bedeckt, so dass ein Stapel von Schichten entsteht, in dem die Schicht der NTCs zwischen dem Substrat der Kathode und der externen Li₂SO₄-Schicht liegt.

2. Kathode (1) gemäß Anspruch 1, umfassend festes Lithiumsulfat (Li₂SO₄) (8), das den festen Schwefel (61), der die externen Wände der NTCs (9) überzieht, wenigstens teilweise einbettet und/oder umhüllt.

3. Kathode (1) gemäß Anspruch 1 oder 2, wobei die Massenbelegung des festen Schwefels (61) größer als 1,5 mg/cm² ist.

4. Kathode (1) gemäß einem der Ansprüche 1 bis 3, wobei die externe Li₂SO₄-Schicht eine Dicke von weniger als 10 nm und mehr als 3 nm aufweist.

5. Lithiumionenbatterie (10), genannt LIB, umfassend die Kathode (1) gemäß einem der Ansprüche 1 bis 4.

6. LIB (10) gemäß Anspruch 5, umfassend:
- eine Anode (3) auf der Basis von Silicium-Nanopartikeln (62),
- ein poröses Element (111, 112), das sich zwischen der Kathode (1) und der Anode befindet.

7. LIB (10) gemäß Anspruch 6, wobei die Anode (3) Folgendes umfasst:
- eine Schicht (42) aus einem leitfähigen Material, die Substrat der Anode genannt wird und den durch die Anode fließenden Strom aufnehmen kann,
- eine Schicht (52) aus Kohlenstoffnanoröhren (NTC) (9), die in elektrischem Kontakt mit dem Substrat der Anode ausgerichtet sind und sich hauptsächlich senkrecht zum Substrat der Anode erstrecken,
- Silicium-Nanopartikel (62), die die Außenwand der NTCs überziehen.

8. LIB (10) gemäß Anspruch 6 oder 7, wobei die Massenbelegung der Silicium-Nanopartikel (62) an Silicium auf der Anode (3) größer als 2 mg/cm² ist.

9. Verfahren zur Herstellung einer Kathode (1), wobei das Verfahren die folgenden Schritte umfasst:
- Bereitstellen einer Elektrode (15), auch als Elektrodenbereitstellungsschritt bezeichnet, umfassend eine Schicht (41) aus einem leitfähigen Material, die den durch die Kathode fließenden Strom aufnehmen kann und Substrat der Elektrode genannt wird, von der aus sich eine Schicht (51) aus Kohlenstoffnanoröhren (NTC) (9), die in elektrischem Kontakt mit dem Substrat der Elektrode ausgerichtet sind und hauptsächlich senkrecht weg erstreckt, dann
- Bedecken einer Seite (14), der Schicht aus NTCs, die externe Seite genannt wird und sich auf der entgegengesetzten Seite der Schicht aus NTCs, die in elektrischem Kontakt mit dem Substrat der Elektrode stehen, befindet, mit einer Lösung, die geschwefelte Lösung genannt wird und festen Schwefel (61) umfasst, wobei ein Überzug aus festem Schwefel entsteht, der wenigstens teilweise eine externe Wand der NTCs überzieht, dann
- Bedecken der externen Seite der Schicht aus NTCs mit einer Lösung, die gelöstes Lithiumsulfat (Li₂SO₄) umfasst, wobei eine Schicht (7) aus festem Lithiumsulfat (Li₂SO₄) entsteht, die die Schicht aus NTCs bedeckt.

10. Verfahren gemäß Anspruch 9, wobei die geschwefelte Lösung ein Pulver aus festem Schwefel, ein polares Lösungsmittel und Kohlenstoffdisulfid umfasst und das Volumenverhältnis zwischen dem Kohlenstoffdisulfid und dem polaren Lösungsmittel zwischen 10 und 30% liegt.

11. Verfahren gemäß Anspruch 9 oder 10, umfassend einen Plasmabehandlungsschritt genannten Schritt, der darin besteht, die NTCs (9) der Elektrode (15) mit einem kalten Plasma und/oder Wasserdampf zu behandeln; wobei der Plasmabehandlungsschritt vor dem Schritt, der darin besteht, die Schicht aus NTCs mit der geschwefelten Lösung zu bedecken, und nach dem Elektrodenbereitstellungsschritt durchgeführt wird.

12. Verfahren gemäß dem vorstehenden Anspruch, wobei der Plasmabehandlungsschritt weiterhin eine Beschleunigung von allen oder einem Teil der Spezies, die in dem Plasma vorhanden sind, durch Polarisation gegen die Elektrode (15) umfasst.

13. Verfahren gemäß einem der Ansprüche 9 bis 12, wobei der Schritt des Bereitstellens der Elektrode (15) einen Schritt der Synthese der NTCs (9) auf dem Substrat (41, 42) der Elektrode durch chemische Gasphasenabscheidung durch heiße Drähte umfasst, wobei der Syntheseschritt Folgendes umfasst:
- das Anordnen des Substrats der Elektrode im gleichen Abstand zu vier ausgerichteten heißen Drähten,
- das Durchspülen mit einem Gas, das Vorläufer umfasst, parallel zu den heißen Drähten.

14. Verfahren gemäß dem vorstehenden Anspruch, umfassend vor dem Schritt der Synthese der NTCs (9) einen Schritt des Abscheidens einer Schicht, die Sperrschicht genannt wird, aus Aluminiumoxid (Al₂O₃) mit einer Dicke zwischen 5 und 80 nm auf dem Substrat der Elektrode und einer Eisenschicht, die Katalysatorschicht genannt und auf der Sperrschicht abgeschieden wird, mit einer Dicke zwischen 1 und 30 nm.

15. Verfahren zur Herstellung einer Lithiumionenbatterie (10) genannt LIB, umfassend die Schritte:
- Durchführen des Verfahrens zur Herstellung einer Kathode (1) gemäß einem der Ansprüche 9 bis 14,
- Bereitstellen einer Anode (3) für die LIB,
- Zusammensetzen der LIB, indem man ein poröses Element (11) zwischen die Kathode und die Anode einfügt.

## Claims

1. A cathode (1) for a lithium-ion battery, comprising:
- a layer (41) of a conductive material, arranged to collect the current flowing through the cathode, referred to as the substrate of the cathode,
- a layer (51) of aligned carbon nanotubes (CNTs) (9) in electrical contact with the substrate of the cathode and mainly extending perpendicularly to the substrate of the cathode,
- solid sulfur (61) which at least partially coats an outer wall of the CNTs, and
- a solid layer (7) of solid lithium sulfate (Li₂SO₄), which layer is referred to as the outer layer of Li₂SO₄, covering the layer of CNTs so as to form a stack of layers, wherein the layer of CNTs is located between the substrate of the cathode and the outer layer of Li₂SO₄.

2. The cathode (1) according to claim 1, comprising solid lithium sulfate (Li₂SO₄) (8) encapsulating and/or enveloping, at least partially, the solid sulfur (61) which coats the outer walls of the CNTs (9).

3. The cathode (1) according to claim 1 or 2, wherein a mass loading of solid sulfur (61) is greater than 1.5 mg/cm².

4. The cathode (1) according to any one of claims 1 to 3, wherein the outer layer of Li₂SO₄ has a thickness of less than 10 nm and greater than 3 nm.

5. A lithium-ion battery (10), referred to as LIB, comprising the cathode (1) according to any one of claims 1 to 4.

6. The LIB (10) according to claim 5, comprising:
- an anode (3) based on silicon nanoparticles (62),
- a porous element (111, 112) arranged between the cathode (1) and the anode.

7. The LIB (10) according to claim 6, wherein the anode (3) comprises:
- a layer (42) of a conductive material, referred to as the substrate of the anode, arranged to collect the current flowing through the anode,
- a layer (52) of aligned carbon nanotubes (CNTs) (9) in electrical contact with the substrate of the anode and mainly extending perpendicularly to said substrate of the anode,
- silicon nanoparticles (62) which coat the outer wall of the CNTs.

8. The LIB (10) according to claim 6 or 7, wherein a silicon mass loading of the silicon nanoparticles (62) of the anode (3) is greater than 2 mg/cm².

9. A method for manufacturing a cathode (1), said method comprising the steps of:
- obtaining an electrode (15), referred to as the electrode obtaining step, said electrode comprising a layer (41) of a conductive material, arranged to collect the current flowing through the cathode, referred to as the substrate of the electrode, from which extends, mainly perpendicularly, a layer (51) of aligned carbon nanotubes (CNTs) (9) in electrical contact with the substrate of the electrode, then
- covering one face (14), referred to as the outer face, of the layer of CNTs, located on the side opposite to a face of the layer of CNTs in electrical contact with the substrate of the electrode, with a solution, referred to as the sulfur solution, comprising solid sulfur (61) to form a coating of solid sulfur which at least partially coats an outer wall of the CNTs, and then
- covering the outer face of the layer of CNTs with a solution comprising dissolved lithium sulfate (Li₂SO₄) to form a layer (7) of solid lithium sulfate (Li₂SO₄) covering the layer of CNTs.

10. The method according to claim 9, wherein the sulfur solution comprises a solid sulfur powder, a polar solvent and carbon disulfide, a volume ratio between the carbon disulfide and the polar solvent is between 10 and 30 %.

11. The method according to claim 9 or 10, comprising a step, referred to as plasma treatment, of treating the CNTs (9) of the electrode (15) with a cold plasma and/or water vapor; the plasma treatment step is carried out prior to the step of covering the layer of CNTs with the sulfur solution and subsequent to the electrode obtaining step.

12. The method according to the preceding claim, wherein the plasma treatment step further comprises acceleration, by polarization, of all or some of the species present in the plasma toward the electrode (15).

13. The method according to any one of claims 9 to 12, wherein the step of obtaining the electrode (15) comprises a step of synthesizing the CNTs (9) on the substrate (41, 42) of the electrode by hot-filament chemical vapor deposition, said synthesis step comprises:
- arranging the substrate of the electrode equidistant from four aligned hot filaments,
- flushing a gas, comprising precursors, parallel to the hot filaments.

14. The method according to the preceding claim, comprising, prior to the step of synthesizing the CNTs (9), a step of depositing a layer, referred to as the barrier layer, of aluminum oxide (Al₂O₃) with a thickness of between 5 and 80 nm on the substrate of the electrode and an iron layer, referred to as the catalyst layer, deposited on the barrier layer, with a thickness of between 1 and 30 nm.

15. A method for manufacturing a lithium-ion battery (10), referred to as LIB, comprising the steps of:
- implementing the method for manufacturing a cathode (1) according to any one of claims 9 to 14,
- obtaining an anode (3) for the LIB,
- assembling the LIB by interposing a porous element (11) between the cathode and the anode.
